# EUROPÄISCHE PATENTSCHRIFT

(11) **EP 0 402 658 B1**
(45) Veröffentlichungstag und Bekanntmachung des Hinweises auf die Patenterteilung: **29.03.1995**
(21) Anmeldenummer: 90109496.1
(22) Anmeldetag: 18.05.1990
(51) Int. Cl.: H04Q 1/14

(54) **Anschlussverteilerleiste für ankommende und abgehende elektrische Leitungen**
Terminal distribution block for incoming and outgoing electrical lines
Bloc de raccordement pour lignes électriques entrantes et sortantes

(30) Priorität: 15.06.1989 DE 3919622
(43) Veröffentlichungstag der Anmeldung: 19.12.1990
(73) Patentinhaber: SIEMENS AKTIENGESELLSCHAFT, 80333 München (DE)
(72) Erfinder: Knoll, Rudolf, Dipl.-Ing. (FH), D-8137 Berg 3 (DE)

(56) Entgegenhaltungen:
- DE-B- 2 658 296
- FR-A- 2 519 222
- FR-A- 2 526 592
- US-A- 4 262 173

## Beschreibung

Die Erfindung betrifft eine, z.B. aus US-A-4262173 bekannte Anschlußverteilerleiste, die aus einem Kontaktteilgehäuse und einem damit verbundenen Unterteilgehäuse besteht, zur Verbindung von ankommenden und abgehenden Leitungsadern in einem Telekommunikationssystem, insbesondere in einem Nebenstellensystem mit Hilfe von in mindestens einer Reihe paarweise benachbart angeordneten und in entsprechenden Aufnahmekammern des Kontaktteilgehäuses gehaltenen Kontaktbauelementen, die mit ihrem als Klemmelement ausgebildeten einen Endbereich jeweils dem isolierfreien Klemmanschluß von Leitungsadern dienen und an ihrem, zumindest für eines der einander zugeordneten Kontaktbauelemente federnd ausgebildeten anderen Endbereich Kontaktpole aufweisen, die zusammen mit dem Kontaktpol dieses zugeordneten benachbarten Kontaktbauelementes eine auftrennbare galvanische Verbindung bewirken.

Bei einer derartigen Anschlußverteilerleiste mit einer Mehrzahl von den abisolierfreien Anschluß elektrischer Leiter gestattenden Anschlußklemmelementen weisen diese in die gleiche Richtung. Für die Anordnung der paarweise einander zugehörigen Kontaktbauelemente wird einschließlich der zwischen ihnen liegenden Trennstelle jeweils angenähert die gesamte Breite einer solchen Anschlußverteilerleiste benötigt. Die anzuschließenden Leitungsadern werden unter Einbeziehung von Führungsösen beidseitig außen entlang der längsseitigen Begrenzungsflächen geführt. Werden solche Leisten mit ihren Längsseiten nebeneinander gereiht an einem Aufnahmegestell montiert, so wird in der Regel ein möglichst geringer Abstand zwischen ihnen gewählt, um die größtmögliche Anzahl derartiger Leisten anbringen zu können. In einem solchen Fall werden dann aufgrund dieser engen Verhältnisse die notwendigen manuellen Verdrahtungsarbeiten erheblich erschwert.

Es ist die Aufgabe der Erfindung die in einem Kommunikationssystem eingesetzten Anschlußverteilerleisten so auszubilden, daß der im Aufnahmegestell vorgesehene Raum möglichst optimal genutzt wird und die einzelnen Anschlußelemente für Verdrahtungsänderungen problemlos zugänglich sind. Dies wird dadurch erreicht, daß für eine Anschlußverteilerleiste der eingangs genannten Art bezogen auf jedes Paar von Kontaktbauelementen jeweils das Klemmelement des einen Kontaktbauelementes an einer oberen Längsseite und das Klemmelement des zugeordneten anderen Kontaktbauelementes an einer unteren Längsseite der Anschlußverteilerleiste aus dem Kontaktteilgehäuse herausgeführt sind, daß durch eine der übrigen Längsseiten der Anschlußverteilerleiste aufgrund der Formgebung zumindest eines der genannten Gehäuse ein kanalartiger innenseitiger Verdrahtungsraum begrenzt wird, der durch einen quer zur Längsseite verlaufenden Steg in einen ersten zu der oberen Längsseite offenen und den dort herausgeführten Anschlußklemmelementen zugeordneten Verdrahtungsraum und in einen zweiten, zu der unteren Längsseite hin offenen und den dort herausgeführten Anschlußklemmelementen zugeordneten Verdrahtungsraum unterteilt ist.

Durch diese spezielle erfindungsgemäße Herausführung der Anschlußklemmelemente auf der einen Längsseite und auf der gegenüberliegenden Längsseite wird gegenüber der bekannten Ausführung der für die Anbringung der Kontaktbauelemente notwendige Raum reduziert, zumal eine solche Anordnung auch eine besonders einfache, einen geringen Abstand voneinander erfordernde Ausgestaltung der Kontaktbauelemente zuläßt. Der für die Anordnung der Kontakte notwendige Anteil an der Breitenabmessung einer solchen Leiste läßt sich soweit reduzieren, daß einschließlich des innenseitig erfindungsgemäß geschaffenen Verdrahtungsraumes die Gesamtbreite bei gleicher Anzahl von Kontaktbauelementen höchstens die gleiche Breite einer bereits eingesetzten bekannten Anschlußverteilerleiste aufweist. Da durch die innenseitigen Verdrahtungsräume die erfindungsgemäßen Verteilerleisten ganz dicht unmittelbar aneinander gereiht werden können, kann die Anzahl der in einer bestimmten Gesamtlänge unterzubringenden Leisten erhöht werden. Sowohl bezogen auf die Größe der Aufnahmegestelle und bezogen auf die einzelnen Leisten wird also der jeweils zur Verfügung stehende Raum maximal genutzt. Die erfindungsgemäß vorgesehenen längsseitigen Verdrahtungsräume werden im wesentlichen durch die Formgebung des Unterteilgehäuses, dessen seitlicher Begrenzungsbereich T-förmig ausgestaltet ist, gebildet.

Es können beispielsweise die zu den Teilnehmern führenden Leitungen, die häufig zu ändern sind an der als Bedienungsseite anzusehenden oberen Seite angeschlossen werden. Diese ist also leicht zugänglich, sodaß notwendige Änderungen in der Belegung der Leiste problemlos vorgenommen werden können. Die Klemmelemente für die in der Regel selten zu ändernden systemseitigen, d.h. zur Vermittlungseinrichtung führenden Leitungen sind erfindungsgemäß auf der Rückseite der Leiste angeordnet. Aufgrund dieser unterschiedlichen Häufigkeit von zu erwartenden Änderungen sind die an der Bedienungsseite und an der Rückseite herausgeführten einzelnen Klemmelemente gemäß einer Weiterbildung der Erfindung hinsichtlich des konstruktiven Aufbaus, ihrer Ausgestaltung und Anordnung unterschiedlich ausgebildet. Diese in den Ansprüchen 3 bis 9 beanspruchte Ausbildung hat zur Folge, daß sich gegenüber einer ausschließlichen Verwendung der bedienungsseitig vorgesehenen Kontaktbauelemente eine erhebliche Kostenersparniss ergibt, wenn die systemseitigen Klemmelemente wesentlich einfacher ausgebildet sind. Dies hat eine Kostenreduzierung bezüglich der Herstellung sowie der Montage zur Folge die sich insbesondere bei den hohen Stückzahlen mit denen diese Bauelemente zur Anwendung gelangen, wesentlich auswirkt.

Im Zusammenhang mit dieser andersartigen Ausbildung unterscheiden sich die an der sogenannten Bedienungsseite und die an der Rückseite herausgeführten Klemmelemente in ihren Dickenabmessungen. An der Austrittsöffnung der an der Rückseite herausgeführten dünneren Klemmelemente ist erfindungsgemäß ein nach außen gerichteter Führungssteg vorgesehen, an dem das aus einfachem Bandmaterial ausgeführte Klemmelement anliegt. Durch den Führungssteg wird das dünnere Klemmelement zur Dicke des an der anderen Seite herausgeführten Klemmelementes ergänzt. Dadurch ergibt sich der wesentliche Vorteil, daß ein und dasselbe Werkzeug zum Eindrücken der Drähte verwendet werden kann.

Durch die in den Ansprüchen 10 bis 13 enthaltene Ausgestaltung und Anordnung der Kontaktbauelemente ist lediglich ein äußerst schmaler Bereich für deren Einbau erforderlich. Gemäß einer Weiterbildung der Erfindung ist zumindest in einem der kanalartigen Verdrahtungsräume für die darin zu führenden Leitungsadern eine Anordnung vorgesehen, die eine Zugentlastung ermöglicht. Dies kann beispielsweise durch die Verwendung eines Druckstückes geschehen, das in einem schmalen Bereich der seitlichen Begrenzungsflächen zwischen diese eingedrückt wird. Um eine sichere Lagefixierung dieses Druckstückes zu ermöglichen sind die betreffenden Bereiche der Kanalwände mit einer Zahnung versehen. Ist diese Zugentlastungen für die systemseitigen Leitungen vorgesehen, so kann eine entsprechende Vorverdrahtung vor dem endgültigen Anbringen der Verteilerleiste an einen entsprechenden Aufnahmegestell vorgenommen werden, da das am anderen freien Ende einen Kabelstecker aufweisenden Kabel durch die erfindungsgemäß vorgesehene Anordnung zur Zugentlastung einfach zu fixieren ist.

Weitere vorteilhafte Ausgestaltungen der Erfindung sind den restlichen Unteransprüchen zu entnehmen.

Im folgenden wird die Erfindung anhand eines in der Zeichnung dargestellten Ausführungsbeispiels näher erläutert.
- FIG 1: zeigt einen Querschnitt durch eine Anschlußverteilerleiste mit Kontaktbauelmenten,
- FIG 2: zeigt eine ausschnittsweise Draufsicht auf die Anschlußverteilerleisten nach FIG 1,
- FIG 3 und 4: zeigen Ansichten der Kontaktbauelemente nach FIG 1,
- FIG 5: zeigt eine verkleinerte Draufsicht auf die Unterseite des Unterteilgehäuses und
- FIG 6: eine ausschnittsweise Seitenansicht des selben,
- FIG 7: zeigt einen Querschnitt durch das Unterteilgehäuse.

Die Anschlußverteilerleiste 34 setzt sich aus dem Kontaktteilgehäuse 1, und einem Unterteilgehäuse 2 zusammen. Eine solche Anschlußverteilerleiste kann in gleicher Weise wie weitere gleichartige Leisten beispielsweise durch in den Einschnitt 28 bzw. den Zapfen 31 eingebrachte und darin geführte Befestigungselemente mit einem entsprechenden Aufnahmegestell verbunden werden. In das Kontaktteilgehäuse 1, das die Verteilerleiste mitbildet sind Kontaktbauelemente 5 bzw. 6 eingesetzt. Die Verteilung dieser Kontaktbauelemente 5 bzw. 6 im Kontaktteilgehäuse 1 ist in der FIG 2 angedeutet. Diese sind jeweils unmittelbar benachbart einander paarweise zugeordnet, wobei zwei gegeneinander versetzte Reihen solcher Paare von Kontaktbauelementen 5, 6 gebildet sind. Zwischen den jeweils einander zugeordneten Kontaktbauelementen 5, 6 hat das Kontaktteilgehause auf der als Bedienungsseite anzusehenden oberen Seite Durchtrittsöffnungen 39 für strichpunktiert angedeutete Trennelemente bzw. Trennstecker 26. Die beiden versetzt gegeneinander angeordneten Reihen von paarweise einander zugeordneten Kontaktbauelementen erstrecken sich in Längsrichtung der Verteilerleisten.

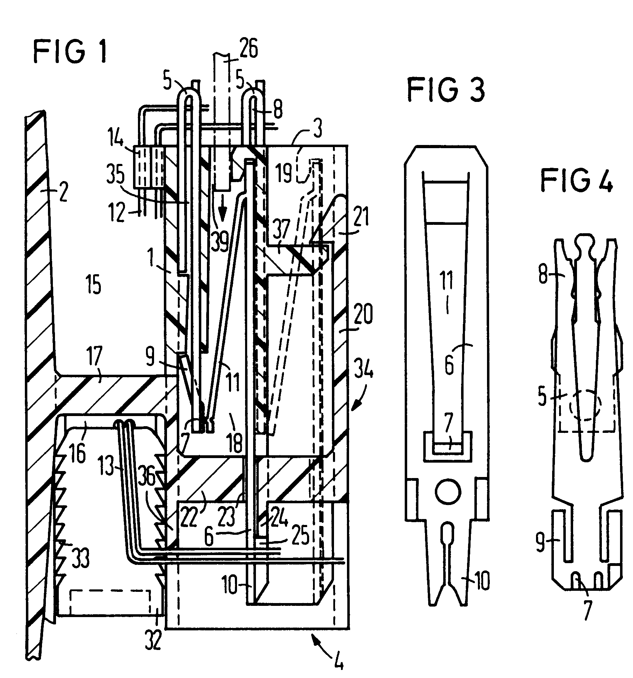

Die aus dem Kontaktteilsgehäuse 1 nach oben bzw. nach unten herausgeführten Endbereichen 8 bzw. 10 der eingesetzten Kontaktbauelemente 5 bzw. 6 sind als Schneidklemmen ausgebildet, so daß ein Kontakt zwischen diesem Klemmelement und einem herangeführten Leitungsdraht 12 bzw. 13 ohne zusätzliche Kontaktierungsmaßnahmen nur durch Eindrücken in die Schneide erreicht wird. Die an den Schneidklemmen 10 der Kontaktbauelemente 5 herangeführten Leitungsdrähte 12 können beispielsweise in einem Kommunikationssystem die zu den Teilnehmern führenden Leitungen sein. Für solche Leitungen sind Änderungen in der Belegung der Verteilerleiste häufiger erforderlich. Da diese an der Bedienungsseite 3 angeschlossen werden sind solche Änderungen problemlos durchzuführen. Die an die Schneidklemmen 10 der Kontaktbauelemente 6 angeschlossenen Leitungsadern können beispielsweise die Verbindung zum Kommunikationssystem herstellen. Da die Belegung für diese Leitungsadern sehr selten zu ändern ist wird diese Tatsache für die Auswahl der Art der Kontaktbauelemente berücksichtigt. Das Kontaktbauelement 6 ist gegenüber dem Kontaktbauelement 5 wesentlich einfacher gestaltet. Aus der FIG 4 ist zu ersehen, daß das Kontaktbauelement 5 als sogenannte Doppelschneidklemme ausgebildet ist, die sich zum Anschluß von zwei Leitungsadern 12 eignet. Dies ist insbesondere bei Änderungsarbeiten von Vorteil, bei denen die neuen Verbindungen bereits vorbereitend festgelegt werden können, bevor die ursprünglich vorhanden Verbindungen getrennt werden. Das für häufige Änderungen in der Belegung geeignete Klemmelement des Kontaktbauelementes 5 weist also zwei nebeneinander liegende Klemmschlitze auf, die durch zwei Außenstege und einem Mittelsteg begrenzt werden. Zur Bildung dieser genannten Stege ist das für das Kontaktbauelement verwendete Bandmaterial in sich zurückgebogen, so daß auf diese Weise eine entsprechend stabil ausgebildete Schneidklemme 8 entsteht. Aus der FIG 3 ist ersichtlich, daß die Scheidklemme 10 des Kontaktbauelementes 6 dagegen wesentlich einfacher aufgebaut ist. Sie hat als sogenannte Einfachklemme nur einen einzigen Klemmschlitz und ihre Dickenabmessung entspricht lediglich der des verwendeten Bandmaterials. Ein solches Kontaktbauelement 6 ist wesentlich Kostengünstiger herzustellen als das in der FIG 4 gezeigte Kontaktbauelement 5.

Die Kontaktbauelemente 5 bzw. 6 sind in Aufnahmekammern 35 bzw. 18 des Kontaktteilgehäuses 1 eingesetzt und darin gehalten. Das Kontaktbauelement 5, das sich im wesentlichen geradlinig zur Rückseite 4 der Verteilerleiste erstreckt weist am rückseitigen Ende einen federnd abgespreitzten Rastlappen 9 auf. Dieser hintergreift einen Absatz des Kontaktteilgehäuses 1. An dem der Rückseite 4 zugewandten Ende sind sie mit zumindest einem Kontaktpol 7 versehen.

Das Kontaktbauelement 6 ist in einer Nut 19 des Kontaktegehäuses 1 gehalten. Sie könnten mit einem nicht dargestellten abgebogenen Verriegelungenslappen gehalten werden, der z.B. aufgrund der Eigenspannung des Kontaktbauelementes in eine entsprechende Vertiefung des Gehäuses eingreift. Das Kontaktbauelement 6 ist in der Nähe der Bedienungsseite 3 im spitzen Winkel in sich zur Rückseite 4 hin zurückgebogen. Dieser Teilabschnitt 11 wirkt als Feder, die an ihrem freien Ende ebenfalls einen Kontaktpol 7 aufweist, der mit dem entsprechenden Gegenkontaktpol des anderen Kontaktbauelementes 5 kontaktiert. Diese Kontaktstelle kann dadurch aufgetrennt werden, daß der strichpunktiert angedeutete Trennstecker 26 in der angegebenen Pfeilrichtung in das Kontaktteilgehäuse 1 eingeschoben wird. Er trifft dabei auf den schrägstehenden Abschnitt des Kontaktbauelementes 6 und wird vom Gegenkontakt weggedrückt. Die Kontaktbauelemente 5 und 6 bilden insgesamt angenähert eine Z-Form. Bei hoher Kontaktsicherheit ermöglicht dies einen sehr geringen Abstand zwischen den angenähert senkrecht zur Bedienungsseite 3 verlaufenden Abschnitten der Kontaktbauteile 5, 6. Das Kontaktteilgehäuse 1 kann demnach entsprechend schmal ausgebildet sein.

Für das Heran- bzw. Abführen von Leitungsadern dienen die beiden kanalartigen Verdrahtungsräume 15 bzw. 16, die durch einen quer zu der einen Außenwand des Unterteilgehäuses 2 verlaufenden Steg 17 voneinander getrennt sind. Dadurch, daß infolge der speziellen Ausbildung der Kontaktbauelemente 5, 6 der für ihre Anordnung erforderliche Gehäuseteil besonders schmal ausgebildet sein kann, sind diese Verdrahtungsräume 15, 16 in einer Verteilerleiste unterzubringen, die nicht breiter ist als eine Leiste nach dem Stand der Technik mit einer gleichen Anzahl von Kontaktbauelement-Reihen. Die innenseitige Begrenzung für den Verdrahtungsraum 15 wird durch Rasthaken 21 gebildet, die ebenso wie die Rasthaken 20 in später noch zu beschreibender Weise zur Befestigung des Kontaktteilgehäuses 1 mit dem Unterteilgehäuse 2 dienen. Die im Verdrahtungsraum 15 zu führenden Leitungen stellen die Teilnehmerleitungen dar. Zu einer gewissen Vorzentriertung der einzelnen Leitungsadern die in die Klemmelemente 8 eines Kontaktbauelementes 5 eingefügt werden dienen die an der Oberkante des Kontaktteilgehäuses 1 vorhandenen Ansätze 14. Der für die systemseitigen Leitungsadern vorhandene Verdrahtungsraum 16 ist innenseitig durch eine zum Unterteilgehäuse 2 gehörende Wandplatte begrenzt, an die eine Bodenplatte 22 zur Auflage des Kontaktteilgehäuses 1 angesetzt ist. Für diese Systemleitungen 13 ist an der Verteilerleiste selbst eine Zugentlastung vorgesehen. Diese kann beispielsweise mit Hilfe des einzusetzenden Druckstückes 32 erfolgen, das seinerseits durch eine vorhandene Zahnung 33 fixiert wird. Neben der Realisierung der Zugentlastung für die Systemleitung in Form des Druckstückes 32, kann diese auch als optionale Möglichkeit für die Anbringung eines Kabelbinders vorgesehen werden. Es kann somit in einfacher Weise eine Vorverdrahtung der Systemleitungen im Werk vorgenommen werden.

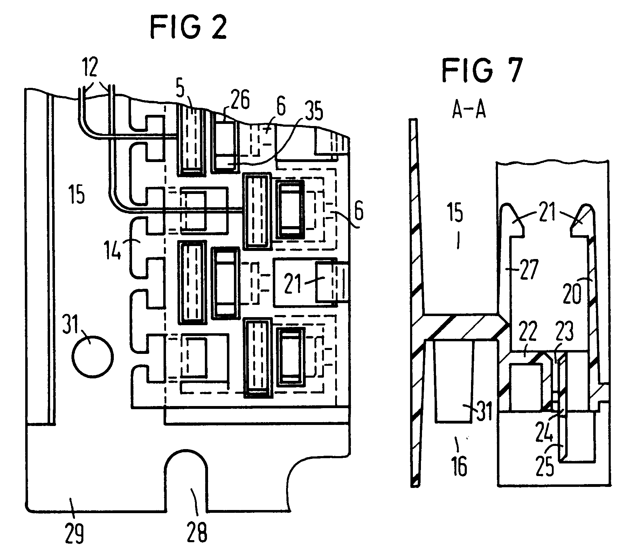

Es sind Befestigungslöcher zur Befestigung der einzelnen Verteilerleisten an einem Aufnahmegestell vorgesehen. Zur Montageerleicherung sind Schraubenführungen in Form des Zapfens 31 vorhanden, der im Ausführungsbeispiel nach der FIG 7 in den Verdrahtungsraum 16 hineinragt. Bei mehrfachen Anordnung solcher Verteilerleisten, die mit ihren Stirnseiten in Reihe liegen würde der Zapfen 31 den Drahtführungskanal 16 beengen. Es sind deshalb für diese Zapfen Sollbruchstellen vorgesehen, so daß sie im Bedarfsfalle sehr leicht entfernt werden können. Zur Konzentrierung der im Verdrahtungsraum 16 geführten Leitungsadern sind wie aus der FIG 5 ersichtlich die Einschnitte 30 vorhanden. Über diese Einschnitte 30 wird ein Leitungsdraht dann zu den Klemmelementen 10 der Kontaktbauelemente 6 geführt und in diese Klemmelemente eingedrückt.

Wie bereits erwähnt ist das Kontaktbauelement 6 aus Gründen der Kostenerspraniss einfacher gestaltet als das Kontaktbauelement 5. Insbesondere entspricht die Dickenabmessung des an dem einen Ende des Kontaktbauelementes 5 vorhandenen Klemmelementes 10 lediglich der Materialstärke des für dieses Kontaktbauelement verwendeten Bandmaterials. Um nun für die beiden Arten von Klemmelementen d. h. für das Klemmelement des Kontaktbauelementes 5 und für das Klemmelement des Kontaktbauelementes 6 das gleiche Werkzeug für das Eindrücken der Leitungsdrähte verwenden zu können, wird das Klemmelement 10 zur Dicke des Klemmelementes 8 des Kontaktbauelementes 5 ergänzt. Dies erfolgt dadurch, daß unmittlebar an der Durchtrittsöffnung für das Klemmelement 10 ein dem Unterteilgehäuse 2 zugehöriger Führungssteg 24 vorgesehen ist. Seine Dicke entspricht ungefähr dem Differenzbetrag in der Dickenabmessung des Klemmelementes 10 und des Klemmelementes 8. Der Steg 24 weist einen Schlitz 25 auf, damit mit dem gleichen Werkzeug das Ende des anzuschließenden Leitungsdrahtes in das Klemmelement 10 in gleicher Weise wie ein Leitungsdraht in das Klemmelement 8 des Kontaktbauelementes 5 eingedrückt werden kann. Wie die FIG 5 zeigt, sind die vor den Durchlaßöffnungen für die Klemmelemente angebrachten Führungsstege zur Erreichung der notwendigen Stabilität über entsprechende Querstege miteinander verbunden, so daß eine mäanderartige Form entsteht.

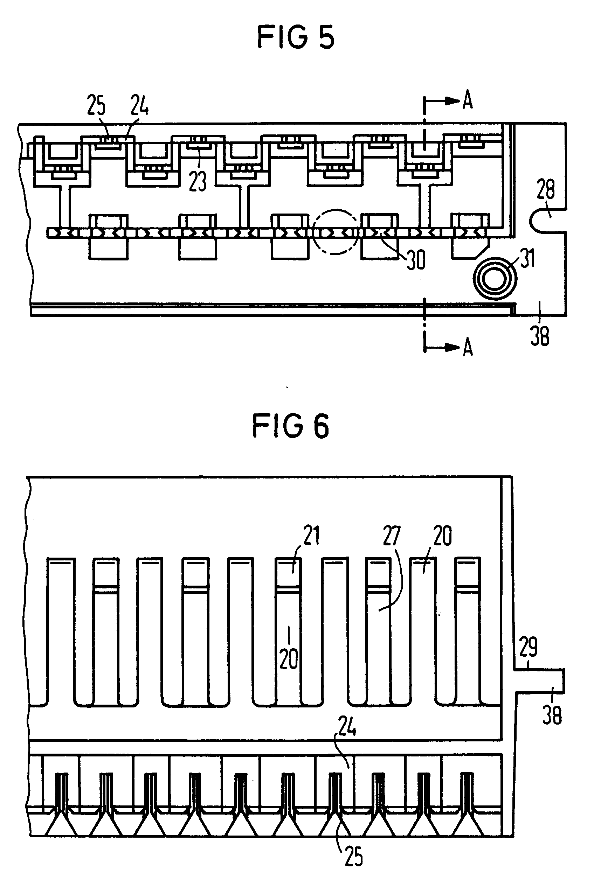

Die Anordnung der Stege und des vorgesehenen Schlitzes 25 ist auch der Seitenansicht nach der FIG 6 entnehmbar. In der Seitensicht des Unterteilgehäuses 2 nach der FIG 6 sind in gleicher Weise wie in der Querschnittsdarstellung der FIG 7 die Rasthaken 20 bzw. 27 erkennbar, die über die Längsrichtung der Verteilerleiste jeweils in einem bestimmten Abstand voneinander mehrfach vorgesehen sind. Beim Aufschieben des mit den Kontaktbauelementen bestückten Kontaktteilgehäuses 1 werden die gefederten Rastnasen 21 der Rasthaken 20, 27 seitlich weggedrückt und hintergreifen nach dem Aufsetzen des Kontaktteilgehäuses auf der Bodenplatte 22 die Ansätze 37 des Kontaktteilgehäuses 1. Die an der Unterseite 4 herauszuführenden Klemmelemente 10 der Kontaktbauelemente 6 werden beim Eindrücken des Kontaktteilgehäuses 1 durch die Öffnungen 23 der Bodenplatte 22 geführt und liegen am Steg 24 an. Die Zwischenräume zwischen den Rasthaken 20, 27 werden nach dem Aufbringen des Kontaktteilgehäuses durch seine entsprechenden streifenartigen Wandteile ausgefüllt.

Die Anschlußverteilerleiste 34 kann zusammen mit anderen Leiten beispielsweise auf einen Schwenkrahmen montiert sein, so daß auch die Rückseite 4 bedingt zugänglich bleibt. Die Oberfläche 29 des für eine Befestigung der Verteilerleiste in einer entsprechenden Aufnahmegestell vorgesehenen Ansatzes 38 kann mit einer Beschriftung versehen werden, die die Position der einzelnen Kontaktbauelemente markiert.

## Patentansprüche

1. Anschlußverteilerleiste (34), die aus einem Kontaktteilgehäuse (1) und einem damit verbundenen Unterteilgehäuse (2) besteht, zur Verbindung von ankommenden und abgehenden Leitungsadern in einem Telekommunikationssystem, insbesondere in einem Nebenstellensystem, mit Hilfe von in mindestens einer Reihe paarweise benachbart angeordneten und in entsprechenden Aufnahmekammern (35, 18) des Kontaktteilgehäuses enthaltenen Kontaktbauelementen (5, 6), die mit ihrem als Klemmelement ausgebildeten einen Endbereich (8, 10) jeweils den abisolierfreien Klemmanschluß von Leitungsadern dienen und an ihrem, zumindest für eines der einander zugeordneten Kontaktbauelemente (6) federnd ausgebildeten anderen Endbereich Kontaktpole (7) aufweisen, die zusammen mit dem Kontaktpol des zugeordneten benachbarten Kontaktbauelementes (5) eine auftrennbare galvanische Verbindung bewirken,
**dadurch gekennzeichnet**,
daß bezogen auf jedes Paar von Kontaktbauelementen (5, 6) jeweils das Klemmelement (8) des einen Kontaktbauelementes (5) an einer oberen Längsseite (3) und das Klemmelement (10) des zugeordneten anderen Kontaktbauelementes (6) an einer unteren Längsseite (4) der Anschlußverteilerleiste (34) aus dem Kontaktteilgehäuse (1) herausgeführt sind, daß durch eine der übrigen Längsseiten der Anschlußverteilerleiste (34) aufgrund der Formgebung zumindest eines der genannten Gehäuse (2) ein kanalartiger innenseitiger Verdrahtungsraum begrenzt wird, der durch einen quer zur Längsseite verlaufenden Steg (17) in einen ersten zu der oberen Längsseite (3) offenen und den dort herausgeführten Anschlußklemmelementen (8) zugeordneten Verdrahtungsraum (15) und in einen zweiten zu der unteren Längsseite (4) hin offenen und den dort herausgeführten Anschlußklemmeelementen (10) zugeordneten Verdrahtungsraum (16) unterteilt ist.

2. Anschlußverteilerleiste nach Anspruch 1,
**dadurch gekennzeichnet,**
daß die kanalartigen Verdrahtungsräume (15, 16) im wesentlichen durch den eine T-förmige Ausbildung aufweisenden seitlichen Bereich des Unterteilgehäuses (2) entstehen.

3. Anschlußverteilerleiste nach Anspruch 1,
**dadurch gekennzeichnet,**
daß die paarweise einander zugeordneten Kontaktbauelemente (5, 6) jeweils hinsichtlich ihres konstruktiven Aufbaus und gegebenenfalls hinsichtlich der Anzahl der damit anzuschließenden Leitungsadern unterschiedlich ausgebildet sind.

4. Anschlußverteilerleiste nach Anspruch 3,
**dadurch gekennzeichnet,**
daß der dem Klemmanschluß dienende Endbereich (8) des einen Kontaktbauelementes (5) für ein mehrfaches Lösen und erneutes Herstellen einer Klemmverbindung und gegebenenfalls für den Klemmanschluß von mindestens zwei Leitungsadern geeigent ist, daß der dem Klemmanschluß dienende Endbereich (10) des anderen Kontaktbauelementes (6) gegenüber dem erstgenannten Kontaktbauelementes (5) einen einfacheren, konstruktiven Aufbau aufweist.

5. Anschlußverteilerleiste nach Anspruch 4,
**dadurch gekennzeichnet,**
daß die erstgenannte Art (5) von Kontaktbauelementen als Doppelkontaktelement und die zweitgenannte Art (6) als Einfachkontaktelement ausgeführt ist.

6. Anschlußverteilerleiste nach Anspruch 5,
**dadurch gekennzeichnet,**
daß die Klemmelemente (8) der Kontaktbauteile (5) ausschließlich an der oberen Längsseite (3) der Anschlußverteilerleiste (34) und die Klemmelemente (10) der Kontaktbauelemente (6) ausschließlich an der gegenüberliegenden unteren Längsseite (4) der Anschlußverteilerleiste (34) aus dem Kontaktteilgehäuse (1) herausgeführt sind.

7. Anschlußverteilerleiste nach Anspruch 6,
**dadurch gekennzeichnet,**
daß diejenige Seite (4), an der die Klemmelemente (8) herausgeführt sind die Rangierseite darstellt und daß an die an der gegenüberliegenden Seite (4) herausgeführten einfachen Klemmelementen (10) die wenig zu ändernden systemseitigen Leitungsadern (13) angeschlossen sind.

8. Anschlußverteilerleiste nach Anspruch 1,
**dadurch gekennzeichnet,**
daß sich die als Klemmelemente (8, 10) ausgebildeten Endbereiche der paarweise einander zugeordneten Kontaktbauelemente (5, 6) in ihrer Dickenabmessung unterscheiden, daß jeweils an der Austrittsöffnung (23) des dünneren Klemmelementes (6) ein nach außen gerichteter Führungssteg (24) an dem es unmittelbar anliegt, vorgesehen ist, der so bemessen ist, daß er das dünnere Klemmelement (10) zur Dicke des Klemmelementes (8) des jeweils anderen Kontaktelementes (5) ergänzt.

9. Anschlußverteilerleiste nach Anspruch 8,
**dadurch gekennzeichnet,**
daß im Führungssteg (24) ein das Eindrücken des Leitungsdrahtes in das Klemmelement (10) ermöglichender Schlitz (25) vorgesehen ist.

10. Anschlußverteilerleiste nach Anspruch 1,
**dadurch gekennzeichnet,**
daß die im Kontaktteilgehäuse (1) gehaltenen Kontaktbauelemente (5, 6) zusammen angenähert eine Z-förmige Anordnung dadurch bilden, daß das eine Kontaktbauelement (5) im wesentlichen geradlinig verläuft und das andere Kontaktbauelement (6) spitzwinklig in sich zurückgebogen ist, daß das nicht aus dem Kontaktteilgehäuse (1) herausgeführte Ende des Kontaktbauelementes (5) einen Kontaktpol (7) aufweist, der mit dem zurückgebogenen Ende des Kontaktbauelementes (6) vorhandenen Kontaktol (7) kontaktiert und die auftrennbare Kontaktstelle für die galvanische Verbindung untereinander bildet.

11. Anschlußverteilerleiste nach Anspruch 10,
**dadurch gekennzeichnet,**
daß die jeweils ein Paar bildenden Kontaktbauelemente (5, 6) derart im Kontaktteilgehäuse (1) gehalten werden, daß die angenähert parallelen Schenkel der Z-förmigen Anordnung etwa parallel zu den längsseitigen Begrenzungsflächen der Anschlußverteilerleiste ausgerichtet sind und ihre die Klemmelemente (8, 10) aufweisenden Enden angenähert senkrecht zur oberen (3) bzw. unteren Längsseite (4) der Anschlußverteilerleiste (34) aus dem Kontaktteilgehäuse (1) herausgeführt sind.

12. Anschlußverteilerleiste nach Anspruch 11,
**dadurch gekennzeichnet,**
daß die Kontaktbauelemente (5, 6) jeweils einstückig ausgbildet sind.

13. Anschlußverteilerleiste nach Anspruch 1,
**dadurch gekennzeichnet,**
daß zumindest für die in einem kanalartigen Verdrahtungsraum (16) geführten Leitungsadern (13) eine die Zugentlastung und die Fixierung der Leitungsadern (13) ermöglichende Anordnung (32) vorgesehen ist.

14. Anschlußverteilerleiste nach Anspruch 13,
**dadurch gekennzeichnet,**
daß die Anordnung als Druckstück (32) ausgebildet ist, daß an dem für seine Anbringung vorgesehenen Teilbereich der Seitenwände des kanalartigen Verdrahtungsrahmens (16) eine Zahnung (33) vorhanden ist.

15. Anschlußverteilerleiste nach Anspruch 1,
**dadurch gekennzeichnet,**
daß bezogen auf eine erste Reihe von paarweise einander zugeordneten Kontaktbauelementen (5, 6) das eine Kontaktbauelement (5) eines jeden Paares in unmittelbarer Nähe der einen längsseitigen Begrenzung des Kontaktteilgehäuses (1) angeordnet ist, das mindestens noch eine zweite Reihe von paarweise einander zugeordneten Kontaktbauelementen (5, 6) vorhanden und gegenüber der ersten Reihe derart Wechselseitig nach innen versetzt angeordnet ist, daß Kontaktbauelemente (5, 6) einer jeden Reihe zueinander angenäherten fluchtend angebracht sind.

16. Anschlußverteilerleiste nach Anspruch 1,
**dadurch gekennzeichnet,**
daß am Unterteilgehäuse (2) zur Auflage für das Kontaktteilgehäuse (1) eine entsprechende Bodenfläche vermittels eines Steges (22) gebildet ist, daß angenähert an der längsseitigen Begrenzungskante des Steges (22) einstückig damit verbundene Rastelemente (20, 27) vorgesehen sind, die nach dem Aufbringen des Kontaktteilgehäuses (1) zur mechanischen Verbindung zwischen diesen und dem Unterteilgehäuse (2) in entsprechende Gegenstücke (37) eingreifen und daß die Bodenfläche Durchtrittsöffnungen (23) für die an der betreffenden Längsseite des Kontaktteilgehäuses (1) herausgeführten Kontaktbauelemente (6) aufweist.

17. Anschlußverteilerleiste nach Anspruch 16,
**dadurch gekennzeichnet,**
daß die Rastelemente als Rasthaken (20, 27) ausgebildet sind, die mehrfach an den seitlichen Begrenzungskanten des dem Unterteilgehäuse (2) zugehörigen Steges (22) vorgesehen sind, daß diese mit einer gefederten Rastnase (21) einen entsprechenden Ansatz (37) des Kontaktteilgehäuses (1) nach dessen Aufbringen hintergreifen.

18. Anschlußverteilerleiste nach Anspruch 17,
**dadurch gekennzeichnet,**
daß die eine Reihe von Rasthaken (20) einen Teil ihrer Außenfläche bildet, daß die Rasthaken (27) der anderen Reihe den innenseitigen Abschluß zumindest des einen kanalartigen Verdrahtungsraumes (15) bilden.

19. Anschlußverteilerleiste nach Anspruch 18,
**dadurch gekennzeichnet,**
daß im Bereich der Zwischenräume zwischen den Rasthaken (20, 27) das Kontaktteilgehäuse (1) streifenartige Wandteile aufweist, so daß nach dem Verrasten des aufgebrachten Kontaktteilgehäuses (1) mit dem Unterteilgehäuse (2) Begrenzungsflächen entstehen, von denen die eine einen Teil der Außenfläche der Verteilerleiste (34) und die andere die innenseitige Begrenzungsgläche zumindest des einen kanalartigen Verdrahtungsraumes (15) mitbildet.

20. Anschlußverteilerleiste nach Anspruch 1,
**dadurch gekennzeichnet,**
daß an dem die beiden kanalartigen Verdrahtungsräume (15, 16) trennenden Quersteg (17) zumindest in einen Verdrahtungsraum (16) hineinreichende Führungszapfen (31) für eine Schraubverbindung vorgesehen sind, daß an der Verbindungsstelle zum Quersteg (17) Sollbruchstellen vorhanden sind die der bedarfsweisen einfachen Entfernung des Führungszapfens (31) dienen.

## Claims

1. Terminal block (34), consisting of a contact housing part (1) and a subelement housing (2) connected thereto, for connecting incoming and outgoing lead wires in a telecommunications system, in particular in a private branch exchange, by means of contact components (5, 6) which are arranged in at least one row in pairs side by side and contained in corresponding holding chambers (35, 18) of the contact housing part, which contact components serve with their one end region (8, 10) constructed as clamping element in each case for the clamping connection of lead wires without stripping and have contact poles (7) at their other end region, resiliently constructed at least for one of the mutually assigned contact components (6), which contact poles, together with the contact pole of the assigned neighbouring contact component (5), effect a DC connection which can be disconnected, characterized in that, with respect to each pair of contact components (5, 6), in each case the clamping element (8) of the one contact component (5) is passed out of the contact housing part (1) on an upper longitudinal side (3) and the clamping element (10) of the assigned other contact component (6) is passed out of the contact housing part (1) on a lower longitudinal side (4) of the terminal block (34), in that a channel-like inner wiring space is bounded by one of the remaining longitudinal sides of the terminal block (34) as a result of the shape of at least one of the mentioned housings (2), which wiring space is subdivided by a web (17), running transverse to the longitudinal side, into a first wiring space (15) which is open towards the upper longitudinal side (3) and assigned to the connecting clamping elements (8) which are passed out there and into a second wiring space (16), which is open towards the lower longitudinal side (4) and assigned to the connecting clamping elements (10) passed out there.

2. Terminal block according to Claim 1, characterized in that the channel-like wiring spaces (15, 16) are produced essentially by the lateral region of the subelement housing (2) which has a T-shaped embodiment.

3. Terminal block according to Claim 1, characterized in that the contact components (5, 6), assigned to one another in pairs, are of different construction in each case with respect to their constructive design and possibly with respect to the number of lead wires which are to be connected therewith.

4. Terminal block according to Claim 3, characterized in that the end region (8), serving for the clamping connection, of the one contact component (5) is suitable for multiple releasing and renewed making of a clamping connection and possibly for the clamping connection of at least two lead wires, in that the end region (10), serving for the clamping connection, of the other contact component (6) has a simpler, constructive design, compared to the first-mentioned contact component (5).

5. Terminal block according to Claim 4, characterized in that the first-mentioned kind (5) of contact components is designed as double contact element and the second-mentioned kind (6) as single contact element.

6. Terminal block according to Claim 5, characterized in that the clamping elements (8) of the contact components (5) are passed out of the contact housing part (1) only on the upper longitudinal side (3) of the terminal block (34) and the clamping elements (10) of the contact components (6) are passed out of the contact housing part (1) only on the opposite lower longitudinal side (4) of the terminal block (34).

7. Terminal block according to Claim 6, characterized in that that side (4) on which the clamping elements (8) are passed out forms the distribution side, and in that the lead wires (13) on the system side, which have to be changed only slightly, are connected to the simple clamping elements (10) which are passed out on the opposite side (4).

8. Terminal block according to Claim 1, characterized in that the end regions, constructed as clamping elements (8, 10), of the contact components (5, 6), which are mutually assigned in pairs, differ in their thickness dimension, in that in each case at the outlet opening (23) of the thinner clamping element (6) an outwardly directed guide web (24) is provided, on which it rests directly and which is designed in such a manner that it complements the thinner clamping element (10) to reach the thickness of the clamping element (8) of the respectively other contact element (5).

9. Terminal block according to Claim 8, characterized in that in the guide web (24) a slot (25) is provided which permits the lead wire to be pressed into the clamping element (10).

10. Terminal block according to Claim 1, characterized in that the contact components (5, 6), held in the contact housing part (1), together approximately form a Z-shaped arrangement, in that the one contact component (5) runs essentially rectilinearly and the other contact component (6) is bent back in itself at an acute angle, in that that end of the contact component (5) which is not passed out of the contact housing part (1) has a contact pole (7) which makes contact by means of the end, which is bent back, of the contact component (6) with the available contact pole (7) and forms the contact point, which can be disconnected, for the mutual DC connection.

11. Terminal block according to Claim 10, characterized in that the contact components (5, 6), in each case forming a pair, are held in the contact housing part (1) in such a manner that the approximately parallel limbs of the Z-shaped arrangement are aligned approximately parallel to the longitudinal bounding surfaces of the terminal block and their ends, having the clamping elements (8, 10), are passed out of the contact housing part (1) approximately perpendicular to the upper (3) or the lower longitudinal side (4) of the terminal block (34).

12. Terminal block according to Claim 11, characterized in that the contact components (5, 6) are each of integral design.

13. Terminal block according to Claim 1, characterized in that at least for the lead wires (13) guided in a channel-like wiring space (16) an arrangement is provided which permits strain relief and fixing of the lead wires (13).

14. Terminal block according to Claim 13, characterized in that the arrangement is designed as pressure piece (32), in that on that part region, provided for its fitting, of the side walls of the channel-like wiring space (16) there is provided a toothing (33).

15. Terminal block according to Claim 1, characterized in that, with respect to a first row of contact components (5, 6), mutually assigned in pairs, the one contact component (5) of each pair is arranged in the direct vicinity of the one longitudinal boundary of the contact housing part (1), in that at least a second row of contact components (5, 6), which are mutually assigned in pairs, is also present and is arranged alternately offset inwardly with respect to the first row in such a manner that contact components (5, 6) of each row are fitted in a mutually approximately aligned manner.

16. Terminal block according to Claim 1, characterized in that on the subelement housing (2) a corresponding bottom area is formed for supporting the contact housing part (1) by means of a web (22), in that approximately on the longitudinal bounding edge of the web (22) locking elements (20, 27), which are integrally connected thereto, are provided which, after fitting the contact housing part (1) for mechanical connection, engage between these locking elements and the subelement housing (2) in corresponding counterpieces (37), and in that the bottom area has passage openings (23) for the contact components (6) which are passed out on the relevant longitudinal side of the contact housing part (1).

17. Terminal block according to Claim 16, characterized in that the locking elements are constructed as locking hooks (20, 27) which are provided in multiples on the lateral bounding edges of the web (22) which is part of the subelement housing (2), in that these locking hooks, with a resilient locking nose (21), grip behind a corresponding projection (37) of the contact housing part (1) after the latter has been fitted.

18. Terminal block according to Claim 17, characterized in that the one row of locking hooks (20) forms a part of its outer surface, in that the locking hooks (27) of the other row form the inner termination at least of the one channel-like wiring space (15).

19. Terminal block according to Claim 18, characterized in that in the region of the interspaces between the locking hooks (20, 27) the contact housing part (1) has strip-like wall parts so that, after the fitted contact housing part (1) has been locked to the sub-element housing (2), bounding areas result, of which the one also forms a part of the outer surface of the terminal block (34) and the other the inner bounding surface at least of the one channel-like wiring space (15).

20. Terminal block according to Claim 1, characterized in that guide pegs (31), which at least reach into a wiring space (16), for a screw connection, are provided on the transverse web (17) separating the two channel-like wiring spaces (15, 16), in that weak points, which serve for removing the guide peg (31) in a simple manner as required, are present at the connecting point to the transverse web (17).

## Revendications

1. Barrette de distribution (34), qui est constituée par un boîtier (1) de pièces de contact et par un boîtier inférieur (2) relié au boîtier précédent, servant à relier des conducteurs d'arrivée et de départ de lignes dans un système de télécommunication, notamment dans un système à central privé, à l'aide d'au moins une rangée de composants de contact (5,6), qui sont disposés par couples au voisinage les uns des autres et sont contenus dans des chambres correspondantes (35,18) du boîtier des pièces de contact et qui, avec une partie d'extrémité (8,10) réalisée sous la forme d'un élément de serrage, servent respectivement au raccordement avec serrage et sans dénudage de conducteurs de lignes et qui possèdent, au niveau de leur autre partie d'extrémité, qui est réalisée de manière à être élastique au moins pour l'un des composants de contact mutuellement associés (6), des pôles de contact (7) qui établissent, avec le pôle de contact du composant de contact voisin associé (5), une liaison galvanique pouvant être interrompue,
caractérisée par le fait
que pour chaque couple de composants de contact (5,6), I'élément de serrage (8) d'un composant de contact (5) ressort au niveau d'un côté longitudinal supérieur (3) de la barrette de distribution (34) et l'élément de serrage (10) de l'autre composant de contact associé (6) ressort, au niveau d'un côté longitudinal inférieur (4) de cette barrette, hors du boîtier (1) des pièces de contact, que l'un des autres côtés longitudinaux de la barrette de distribution (34) limite, en raison de la configuration d'au moins l'un desdits boîtiers (2), un espace intérieur de câblage en forme de canal, qui est subdivisé, par une barrette (17) qui est transversale par rapport au côté longitudinal, en un premier espace de câblage (15), ouvert en direction du côté longitudinal supérieur (3) et associé aux éléments formant bornes de raccordement (8), qui sont ressortis en cet endroit, et en un second espace de câblage (16) qui est ouvert en direction du côté longitudinal inférieur (14) et est associé aux éléments formant bornes de raccordement (10) qui sont ressortis en cet endroit.

2. Barrette de distribution suivant la revendication 1, caractérisée par le fait que les espaces de câblage en forme de canaux (15,16) sont formés essentiellement par une partie latérale, qui possède une forme en T, du boîtier inférieur (2).

3. Barrette de distribution suivant la revendication 1, caractérisé par le fait que les composants de contact (5,6), qui sont associés entre eux par couples, sont agencés différemment pour ce qui concerne leur constitution et éventuellement en ce qui concerne le nombre des conducteurs de lignes, qui doivent y être raccordés.

4. Barrette de distribution suivant la revendication 3, caractérisée par le fait que la partie d'extrémité (8), qui est utilisée pour établir le raccordement de serrage, d'un composant de contact (5) convient pour un desserrage multiple et un rétablissement ultérieur d'une liaison à serrage et éventuellement pour le raccordement avec serrage d'au moins deux conducteurs de lignes, et que la partie d'extrémité (10), qui est utilisée pour le raccordement à serrage, de l'autre composant de contact (6) possède une constitution plus simple que le composant de contact (5) indiqué en premier.

5. Barrette de distribution suivant la revendication 4, caractérisée par le fait que le genre de composants de contact (5), indiqué en premier, est réalisé sous la forme d'un élément de contact double et que le genre (6), indiqué en second, est réalisé sous la forme d'un élément de contact simple.

6. Barrette de distribution suivant la revendication 5, caractérisée par le fait que des éléments de serrage (8) des composants de contact (5) sont ressortis exclusivement au niveau du côté longitudinal supérieur (3) de la barrette de distribution (34) et les éléments de serrage (10) des composants de contact (6) sont raccordés exclusivement au niveau du côté longitudinal inférieur opposé (4) de la barrette de distribution (34), hors du boîtier (1) des pièces de contact.

7. Barrette de distribution suivant la revendication 6, caractérisée par le fait que le côté (4), au niveau duquel ressortent les éléments de serrage (8), représente le côté de rangement et que les conducteurs de lignes (13), qui sont situés du côté du système et doivent être faiblement modifiés, sont raccordés aux éléments de serrage simples (10), qui ressortent au niveau du côté opposé (4).

8. Barrette de distribution suivant la revendication 1, caractérisée par le fait que les parties d'extrémité, qui sont réalisées sous la forme d'éléments de serrage (8,10), des composants de contact (5,6) associés entre eux par couples, ont des dimensions en épaisseur différentes, et qu'il est prévu, respectivement au niveau de l'ouverture de sortie (23) de l'élément de serrage plus mince (6), une barrette de guidage (24) qui est dirigée vers l'extérieur et contre laquelle ce composant s'applique directement et qui est dimensionnée de telle sorte que cette barrette complète l'élément de serrage plus mince (10) pour former une épaisseur égale à celle de l'élément de serrage (8) de l'autre élément de contact respectif (5).

9. Barrette de distribution suivant la revendication 8, caractérisée par le fait qu'une fente (25), qui permet l'insertion du conducteur de la ligne d'un élément de serrage (10), est prévue dans la barrette de guidage (24).

10. Barrette de distribution suivant la revendication 1, caractérisée par le fait que les composants de contact (5,6), qui sont retenus dans le boîtier (1) des pièces de contact forment ensemble approximativement un dispositif en forme de Z, qu'un composant de contact (5) a une disposition essentiellement rectiligne et que l'autre composant de contact (6) est replié sur lui-même sous un angle aigu, que l'extrémité, qui ne sort pas du boîtier (1) des pièces de contact, du composant de contact (5) possède un pôle de contact (7), qui est en contact avec le pôle de contact (7) présent sur l'extrémité repliée du composant de contact (6) et forme le point de contact séparable pour la liaison galvanique.

11. Barrette de distribution suivant la revendication 10, caractérisée par le fait que les composants de contact (5,6), qui forment chacun un couple, sont retenus dans le boîtier (1) des pièces de contact de telle sorte que les branches approximativement parallèles du dispositif en forme de Z sont approximativement parallèles aux surfaces limites des grands côtés de la barrette de distribution et leurs extrémités, qui possèdent les éléments de serrage (8,10) s'étendent au-delà du boîtier (1) des pièces de contact, approximativement perpendiculairement au côté longitudinal supérieur (3) ou au côté longitudinal inférieur (4) de la barrette de distribution (34).

12. Barrette de distribution suivant la revendication 11, caractérisée par le fait que les composants de contact (5,6) sont réalisés respectivement d'un seul tenant.

13. Barrette de distribution suivant la revendication 1, caractérisée par le fait qu'un dispositif (32), qui permet la détente de traction et la fixation des conducteurs (13) des lignes, est prévu au moins pour les conducteurs (13) des lignes, qui sont guidés dans un espace de câblage (16) en forme de canal.

14. Barrette de distribution suivant la revendication 13, caractérisée par le fait que le dispositif est agencé sous la forme d'un élément de pression (32) et qu'une denture (33) est présente sur la partie, prévue pour son montage, des parois latérales du câble de câblage (16) en forme de canal.

15. Barrette de distribution suivant la revendication 1, caractérisée par le fait que dans une première rangée de composants de contact (5,6) associés entre eux par couples, un composant de contact (5) de chaque couple est disposé à proximité immédiate d'une limite longitudinale du boîtier (1) des pièces de contact, qu'il est prévu au moins également une seconde rangée de composants de contact (5,6) associés entre eux par couples et que cette rangée de composants de contact est décalée alternativement vers l'intérieur par rapport à la première rangée de telle sorte que des composants de contact (5,6) de chaque rangée sont alignés au moins approximativement entre eux.

16. Barrette de distribution suivant la revendication 1, caractérisée par le fait qu'une surface de base correspondante est formée, au moyen d'une barrette (22), sur le boîtier inférieur (2) pour le soutien du boîtier (1) des pièces de contact, qu'il est prévu des éléments d'encliquetage (20,27) situés approximativement sur le bord limite longitudinal de la barrette (22) en étant reliés d'un seul tenant à cette dernière et qui, après le montage du boîtier (1) des pièces de contact, s'engagent dans des pièces opposées correspondantes (37), pour établir une liaison entre ce boîtier et le boîtier inférieur (2), et que la surface de base possède des ouvertures de passage (23) pour les composants de contact (6) qui ressortent sur le côté longitudinal correspondant du boîtier (1) des pièces de contact.

17. Barrette de distribution suivant la revendication 16, caractérisée par le fait que les éléments d'encliquetage sont réalisés sous la forme de crochets d'encliquetage (20,27), qui sont prévus de façon multiple sur les bords limites latéraux de la barrette (22) associée au boîtier inférieur (2), et qu'après le montage du boîtier (1) des pièces de contact, ces éléments d'encliquetage s'engagent par un bec d'encliquetage élastique (21), derrière un appendice saillant correspondant (37).

18. Barrette de distribution suivant la revendication 17, caractérisée par le fait qu'une rangée de crochets d'encliquetage (20) forme une partie de la surface extérieure de la barrette, et que les crochets d'encliquetage (27) de l'autre rangée forment la terminaison intérieure au moins d'un espace de câblage (15) en forme de canal.

19. Barrette de distribution suivant la revendication 18, caractérisée par le fait que le boîtier (1) des pièces de contact comporte, dans la zone des espaces intercalaires présents entre les crochets d'encliquetage (20,27), des éléments de paroi en forme de bandes de sorte qu'après l'encliquetage du boîtier (1) des pièces de contact mis en place, avec le boîtier inférieur (4), il apparaît des surfaces limites, dont l'une forme simultanément une partie de la surface extérieure de la barrette de distribution (34) et dont l'autre forme simultanément la surface limite intérieure au moins d'un espace de câblage (15) en forme de canal.

20. Barrette de distribution suivant la revendication 1, caractérisée par le fait que des tétons de guidage (31), qui s'étendent au moins dans un espace de câblage (16), sont prévus pour l'établissement d'une liaison vissée, sur la barrette transversale (17) qui sépare les deux espaces de câblage (15,16) en forme de canaux, et qu'au niveau du point de jonction avec la barrette transversale (17) sont présents des points de rupture de consigne, qui servent à retirer le cas échéant, de façon simple, le téton de guidage (31).
